# EUROPÄISCHE PATENTSCHRIFT

(11) **EP 3 698 065 B1**
(45) Veröffentlichungstag und Bekanntmachung des Hinweises auf die Patenterteilung: **26.05.2021**
(21) Anmeldenummer: 17784287.9
(22) Anmeldetag: 16.10.2017
(51) Int. Cl.: F16D 65/40, F16D 66/02

(54) **BREMSVORRICHTUNG, INSBESONDERE NUTZFAHRZEUGSCHEIBENBREMSE**
BRAKE DEVICE, PARTICULARLY A UTILITY VEHICLE DISK BRAKE
DISPOSITIF DE FREINAGE, EN PARTICULIER FREIN À DISQUE DE VÉHICULE UTILITAIRE

(43) Veröffentlichungstag der Anmeldung: 26.08.2020
(73) Patentinhaber: ZF CV Systems Europe BV, 1170 Brussels (BE)
(72) Erfinder: HENNING, Paul, 68723 Schwetzingen (DE)
(74) Vertreter: Rabe, Dirk-Heinrich
(86) Internationale Anmeldenummer: PCT/EP2017/076311
(87) Internationale Veröffentlichungsnummer: WO 2019/076426

(56) Entgegenhaltungen:
- EP-A2- 2 927 068
- WO-A1-2010/133463
- AT-A2- 516 801
- US-A1- 2005 039 988
- US-A1- 2015 114 771

## Beschreibung

Die Erfindung betrifft eine Bremsvorrichtung, insbesondere eine Nutzfahrzeugscheibenbremse, mit einer Bremsscheibe, mindestens einem Bremsbelag zum Erzeugen einer Bremswirkung an der Bremsscheibe, einem mit dem Bremsbelag gekoppelten Übertragungsglied zum Andrücken des mindestens einen Bremsbelags an die Bremsscheibe, einem Antrieb zum Erzeugen einer Antriebsgröße, einem mit dem Antrieb und dem Übertragungsglied verbundenen nichtlinearen Getriebe zur nichtlinearen Übertragung der Antriebsgröße auf das Übertragungsglied und eine Einstelleinheit zum Einstellen eines Lüftspiels zwischen dem Übertragungsglied und dem Bremsbelag.

Bremsvorrichtungen mit Antrieben zum Erzeugen eines Antriebs-Drehmoments sind in der Kraftfahrzeug-, insbesondere Nutzkraftfahrzeugbranche allgemein bekannt. So offenbart beispielsweise die AT 516801 A2 eine solche Bremsvorrichtung mit einem elektromechanischen Bremsenaktuator. Ziel ist allgemein, eine Bremsung mit elektrischer Energie zu betreiben. Eine Herausforderung besteht darin, ausreichend geringe Bremsbetätigungszeiten zu realisieren und gleichzeitig mittels eines möglichst kleinen und sparsamen Elektromotors eine gewünschte Bremsleistung zu erzielen. Die AT 516801 A2 schlägt hierzu einen elektromechanischen Aktuator vor, der zwei Übertragungsglieder aufweist. An dem ersten Übertragungsglied ist ein Koppelglied vorgesehen, an dem ein Abtastelement angeordnet ist. Das zweite Übertragungsglied weist eine Erhebungskurve auf. Das Abtastelement tastet die Erhebungskurve ab, wobei das zweite Übertragungsglied das Eingangsmoment für das erste Übertragungsglied aufbringt.

Eine weitere Anmeldung mit der Veröffentlichungsnummer WO 2010/133463 A1 offenbart eine mittels eines elektrischen Aktuators und einem nicht linearen Übertragungsglied betätigte Reibungsbremse. Die Einstellung des Lüftspiels erfolgt über eine Steuereinheit, wobei Signale von Sensoren zur Sensierung des Belagverschleißes erfasst und ausgewertet werden. Es ist auch denkbar, dass die Steuereinrichtung zum Einstellen des Lüftspiels Signale einer Andrückeinrichtung zum zuspannen der Bremsbeläge gegen die Bremsscheibe und/oder einer Verschleißnachstelleinrichtung auswertet.

Auch aus der US 2015/114771 A1 geht ein elektrisch aktuiertes Bremssystem mit einem nicht linearen Übertragungsglied zur Übertragung einer nicht liniearen Antriebsgröße in Form eines Getriebes hervor. Die nicht linieare Antriebsgröße ist ein mittels eines Antriebsdrehmoments erzeugter Drehwinkel. Die Einstellung des Lüftspiels zwischen der Bremsscheibe und den Bremsbelägen erfolgt über eine Sensierungseinrichtung, welche den Verschleiß der Bremsbeläge erfasst und an eine Steuereinrichtung weiterleitet.

Die Patentanmeldung EP 2927068 A2 offenbart eine Bremsvorrichtung, die einen Sensierungseinrichtung in Form eines Bremsbelagverschleißsensor bereitstellt. Ein Betätigungsmechanismuspositionssensor stellt ein Signal zum Anzeigen einer Drehung einer Betätigungswelle um eine Achse an eine Steuereinheit bereit. Mittels der Sensierung der Betriebswellendrehung kann indirekt durch Datenerfassung die Breite oder die Größe des Lüftspiels bzw. des Verschleißgrades mindestens eines Bremsbelags angeben werden.

Allerdings haben die vorgenannten Systeme, den Nachteil, dass der konstruktive Aufbau eine hohe Komplexität aufweist, die zum einen bezüglich fertigungs- und montagekostenintensiv ist und zum anderen nicht einfach wartbar. Auch ist es bei solchen Systemen regelmäßig herausfordernd, bei Verschleiß von Bremsbelägen eine gleichbleibend hohe Bremswirkung bereitzustellen.

Vor diesem Hintergrund lag der vorliegenden Erfindung die Aufgabe zugrunde, eine Bremsvorrichtung anzugeben, die die vorstehend beschriebenen Nachteile möglichst weitgehend überwindet. Insbesondere lag die Aufgabe zugrunde, eine Bremsvorrichtung anzugeben, welche mit möglichst minimalem apparativem Aufwand auch bei Verschleiß der Bremsbeläge hohe Bremsleistung bei gleichzeitig geringer Bauteilkomplexität und möglichst geringer erforderlicher Antriebsleistung ermöglicht.

Die Erfindung löst die ihr zugrundeliegende Aufgabe bei einer Bremsvorrichtung der eingangs bezeichneten Art, indem die Vorrichtung einen Bremsbelagsverschleißsensor zur Erfassung des Verschleißgrades des mindestens einen Bremsbelags aufweist, und eine Steuereinheit, welche mit dem Sensor signalleitend verbunden und dazu eingerichtet ist, das Lüftspiel in Abhängigkeit des vom Sensor ermittelten Verschleißes des Bremsbelags zu verändern, wobei die Steuereinheit dazu eingerichtet ist, das Lüftspiel mit zunehmendem Verschleiß des Bremsbelags zu vergrößern.

Die Erfindung betrifft insbesondere Scheibenbremsen, wobei bei einer Scheibenbremse der zum Bremsbelag korrespondierende Gegenpart die Bremsscheibe ist. Prinzipiell ist die Erfindung jedoch auch im Zusammenhang mit Trommelbremsen einsetzbar, bei denen dem Bremsbelag die Bremstrommel gegenübersteht.

Die Erfindung macht sich die Erkenntnis zunutze, dass eine Variation des Lüftspiels dazu eingesetzt werden kann, die Zuspannkraft einer Bremse bei zunehmendem Verschleiß der Bremsbeläge und bei gegebenem Antriebsdrehmoment konstant zu halten, oder aber das Antriebsdrehmoment bei gegebener erforderlicher Zuspannkraft und bei zunehmendem Verschleiß der Bremsbeläge konstant zu halten. Unter dem Lüftspiel wird vorliegend allgemein das Spiel in einem beliebigen Bereich des Betätigungsstranges zwischen Getriebe und Bremsbelag in dem Zustand verstanden, in welchem die Bremse nicht betätigt wird.

Es ist erkannt worden, dass insbesondere beim Nutzfahrzeug Scheibenbremsen, die vergleichsweise hohe Belagsstärken an den Bremsbelägen aufweisen, bei zunehmendem Belagsverschleiß die Steifigkeit des Bremssystems überraschend stark zunimmt. Dies hat damit zu tun, dass der vom Bremsenaktuator gegen die Bremsscheibe gedrückte Bremsbelag in sich eine geringere Materialsteifigkeit aufweist als das den Belag bewegende Übertragungsglied. Je geringer die Dicke des Bremsbelags ist, desto stärker kommt in der Übertragung der Kraft vom Aktuator auf die Bremsschreibe die Steifigkeit des Übertragungsglieds zur Geltung, was sich in der vorbezeichneten Steigerung der Bremssteifigkeit auswirkt. Nach Kontakt des Bremsbelags an der Bremsscheibe wird also bei höherer Bremssteifigkeit relativ zum Hub des Übertragungsglieds relativ ein schnellerer Anstieg der Zuspannkraft zu verzeichnen sein. Wenn trotz des höheren Anstiegs der Zuspannkraft bei stärkerem Bremsenverschleiß die gleiche Zuspannkraft erreicht werden soll, muss die Antriebsleistung erhöht werden, um in ausreichendem Maße gegen den Gegenpart, beispielsweise die Bremsscheibe, drücken zu können. Mit der Erfindung wird es nun erstmals möglich, das Lüftspiel so zu verändern, dass der Punkt des Erstkontakts zwischen dem Bremsbelag und dem korrespondierenden Gegenpart verschleißabhängig so manipuliert wird, dass der Antrieb in einem günstigen Arbeitsbereich arbeitet.

Hierdurch ergibt sich der Vorteil, dass insgesamt auch bei zunehmendem Verschleiß der Bremsbeläge eine geringere Steigerung der Antriebsleistung notwendig ist dazu ausreichend ist, um die Verfügbarkeit einer konstanten Bremskraft sicherzustellen.

Führt ein zunehmender Verschleiß des Bremsbelags dazu, dass sich die Bremsensteifigkeit erhöht, kann nun durch Erhöhung des Lüftspiels erreicht werden, dass das Übertragungsglied erst in dem zweiten Arbeitsbereich des nichtlinearen Getriebes, bei eine größere Kraftübertragung bei geringerem Vorschub erfolgt, mit dem Bremsbelag und der Bremsscheibe in Kontakt tritt. Die Zunahme der Antriebsleistung fällt dann weniger stark aus als bei unverändert kleinem Lüftspiel, oder bleibt konstant.

Hierdurch ergibt sich der Vorteil, dass die infolge Verschleißes des mindestens einen Bremsbelages zunehmende Bremssteifigkeit durch das Verschieben des Kontaktpunkts in den zweiten Arbeitsbereich zumindest teilweise kompensiert wird. Umgekehrt betrachtet ergibt sich somit der Vorteil, dass Antriebe mit geringerem Drehmoment, die in der Regel kleiner und energiesparender sind, für eine solche Bremse verwendet werden können, ohne Einbußen der erzielbaren Bremskraft bei zunehmendem Verschleiß der Bremsbeläge hinnehmen zu müssen.

Die Erfindung wird weitergebildet, indem das nichtlineare Getriebe dazu eingerichtet ist, das Übertragungsglied zwischen einer eingefahrenen Stellung und einer ausgefahrenen Stellung entlang eines Hubwegs X zu bewegen, wobei der Hubweg X aus einer Übertragungsfunktion der Antriebsgröße resultiert. Die Antriebsgröße ist vorzugsweise ein mittels eines Antriebsdrehmoments erzeugter Drehwinkel.

Das Getriebe definiert vorzugsweise die Übertragungsfunktion, und die Übertragungsfunktion ist darin als das Verhältnis H(α) zwischen Eingangsgröße (Hier: Antriebsgröße α) und Ausgangsgröße (Hier: Hubweg X) derart definiert, dass H bei zunehmender Antriebsgröße zwar steigt, die Änderungsrate von H bei zunehmender Antriebsgröße aber abnimmt.

Das Getriebe weist vorzugsweise einen ersten Arbeitsbereich und einen zweiten Arbeitsbereich auf wobei in dem zweiten Arbeitsbereich die Änderungsrate der Übertragungsfunktion geringer ist als im ersten Arbeitsbereich. Weiterhin ist bevorzugt, dass der erste Arbeitsbereich (I) kontinuierlich in den zweiten Arbeitsbereich (II) übergeht. Der Übergang zwischen den Arbeitsbereichen I und II ist vorzugsweise sprungfrei, besonders bevorzugt knickfrei, ausgebildet.

Vorzugsweise ist das nichtlineare Getriebe damit so ausgestaltet, dass zur Bewegung des Bremsbelags in Richtung der Bremsscheibe mittels des Übertragungsglieds zunächst große Hubwege des Übertragungsgliedes bei kleinen Änderungen der Antriebsgröße in dem ersten Arbeitsbereich realisiert werden können, wohingegen in dem zweiten Arbeitsbereich, größere Arbeitsgrößenänderungen einer geringeren Hubänderung des Übertragungsgliedes gegenüberstehen. Würde an dem Übertragungsglied eine konstante Kraft entgegen des Hubs anliegen, würde die benötigte Antriebsleistung, beispielsweise ein Antriebsmoment, in dem zweiten Arbeitsbereich geringer sein als im ersten Arbeitsbereich.

Die Erfindung wird vorteilhaft dadurch weitergebildet, dass die Steuerungseinheit zur linearen Erhöhung des Lüftspiels in Abhängigkeit vom Verschleißgrad des mindestens einen Bremsbelags eingerichtet ist.

In einer alternativen Ausführungsform erfolgt die Erhöhung des Lüftspiels progressiv oder degressiv in Abhängigkeit vom Verschleißgrad des mindestens einen Bremsbelags.

Die Erfindung wird vorteilhaft dadurch weitergebildet, dass die Einstelleinheit einen Spindelaktuator zum Einstellen des Lüftspiels aufweist. Ein solcher Spindelaktuator ermöglicht ein feinfühliges Variieren und Einstellen des Lüftspiels bei vergleichsweise geringer Bauteilkomplexität und hoher Zuverlässigkeit. Der Spindelaktuator weist vorzugsweise einen Grundkörper mit einem Innengewinde sowie ein Verstellelement mit einem Außengewinde auf, wobei eine Rotation des Verstellelementes relativ zu dem Grundkörper eine translatorische Bewegung des Verstellelementes bewirkt.

Die Erfindung wird vorteilhaft dadurch weitergebildet, dass diese einen Temperatursensor zur Erfassung der Temperatur des mindestens einen Bremsbelags aufweist, wobei die Steuereinheit mit dem Temperatursensor signalleitend verbunden ist und dazu eingerichtet ist, das Lüftspiel in Abhängigkeit der vom Sensor ermittelten Temperatur des Bremsbelags zu verändern. Neben dem Verschleißgrad der Bremsbeläge kann insbesondere auch die Temperatur derselben einen Einfluss auf die Bremsensteifigkeit entfalten. Insoweit stellt die Bremsbelagstemperatur eine weitere Messgröße dar, die zur Einstellung des Lüftspiels verwendet wird. Erneut ergibt sich hieraus insgesamt der Vorteil, dass ein bestehendes Antriebs-Drehmoment bestmöglich und unter Berücksichtigung einer Vielzahl von Umgebungs- und Verschleißbedingungen in eine möglichst hohe und konstante Bremskraft gewandelt werden kann.

Weiterhin wird bevorzugt, dass das Lüftspiel mit abnehmender Temperatur des Bremsbelags vergrößert wird. Typischerweise führt eine geringere Temperatur des Bremsbelags dazu, dass die Bremsensteifigkeit zunimmt. Insoweit ist es in Zusammenschau mit dem nichtlinearen Getriebe vorteilhaft, dass das Übertragungsglied bei geringeren Bremsentemperaturen in dem zweiten Momentenbereich des Getriebes mit dem Bremsbelag bzw. der Bremsscheibe in Kontakt tritt, um in diesem Fall höhere Andrückkräfte bei gegebenem Antriebs-Drehmoment zu übertragen.

Die Erfindung ist vorstehend unter Bezugnahme auf eine Bremsvorrichtung beschrieben worden. In einem weiteren Aspekt betrifft die vorliegende Erfindung ferner ein Verfahren zum Betrieb einer Bremsvorrichtung, insbesondere einer Nutzfahrzeugscheibenbremse.

Die Erfindung löst die eingangs bezeichnete Aufgabe in Bezug auf das Betriebsverfahren, in dem dieses die folgenden Schritte aufweist: Erzeugen einer Antriebsgröße, insbesondere eines Antriebswinkels, vorzugsweise mittels eines Antriebs wie beispielsweise eines Elektromotors; Nichtlineare Übertragung der Antriebsgröße auf ein Übertragungsglied, insbesondere mittels eines nichtlinearen Getriebes wie etwa eines Kurvenscheibengetriebes; Erfassen des Verschleißgrades mindestens eines Bremsbelages der Bremsvorrichtung, beispielsweise mittels eines Bremsbelagsverschleißsensors; und Verändern eines Lüftspiels zwischen dem Übertragungsglied und der Bremsscheibe in Abhängigkeit des erfassten Verschleißgrads des mindestens einen Bremsbelags; Vergrößern des Lüftspiels mit zunehmendem Verschleiß des Bremsbelags, vorzugsweise linear, progressiv oder degressiv.

Ein solches Verfahren weist die gleichen Vorteile wie die erfindungsgemäße Bremsvorrichtung auf und weist vorzugsweise die gleichen bevorzugten Ausführungsformen und Weiterbildungen.

Die Erfindung wird durch einen, mehrere oder sämtliche der Schritte weitergebildet:
- Bewegen des Übertragungsglieds zwischen einer eingefahrenen Stellung und einer ausgefahrenen Stellung entlang eines Hubwegs, wobei der Hubweg aus einer Übertragungsfunktion der Antriebsgröße resultiert, wobei vorzugsweise die Antriebsgröße ein mittels eines Antriebsdrehmoments erzeugter Drehwinkel ist;
- Erfassen der Temperatur des mindestsens einen Bremsbelags, beispielsweise mittels eines Temperatursensors; und/oder
- Verändern des Lüftspiels in Abhängigkeit der Temperatur des Bremsbelags, vorzugsweise Vergrößern des Lüftspiels mit abnehmender Temperatur des Bremsbelags und/oder Verringern des Lüftspiels mit zunehmender Temperatur des Bremsbelags.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematischer und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Der Einfachheit halber sind nachfolgend identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung, der bevorzugten Ausführungsform sowie anhand der folgenden Figuren. Im Einzelnen zeigen:
- Fig. 1: ein erstes Ausführungsbeispiel einer erfindungsgemäßen Bremsvorrichtung in einer schematischen Seitenansicht;
- Fig. 2: eine Übertragungsfunktion der Bremsvorrichtung, insbesondere des Getriebes, gemäß Fig. 1;
- Fig. 3: das Ausführungsbeispiel der erfindungsgemäßen Bremsvorrichtung gemäß Fig. 1 in einem Betriebszustand, bei dem die Bremsbeläge verschlissen sind;
- Fig. 4: das Ausführungsbeispiel der erfindungsgemäßen Bremsvorrichtung gemäß Fig. 1 in einem weiteren Betriebszustand bei verschlissenen Bremsbelägen mit justiertem Lüftspiel;
- Fig. 5: eine Einstellfunktion des Lüftspiels in Abhängigkeit vom Verschleiß der Bremsbeläge;
- Fig. 6: Diagramme, in welchen Antriebsmoment und Zuspannkraft jeweils über dem Drehwinkel einer Kurvenscheibe für unterschiedliche Bremsensteifigkeiten aufgetragen sind; und
- Fig. 7: das Ausführungsbeispiel der erfindungsgemäßen Bremsvorrichtung gemäß Fig. 1 in Form eines Blockschaltbildes.

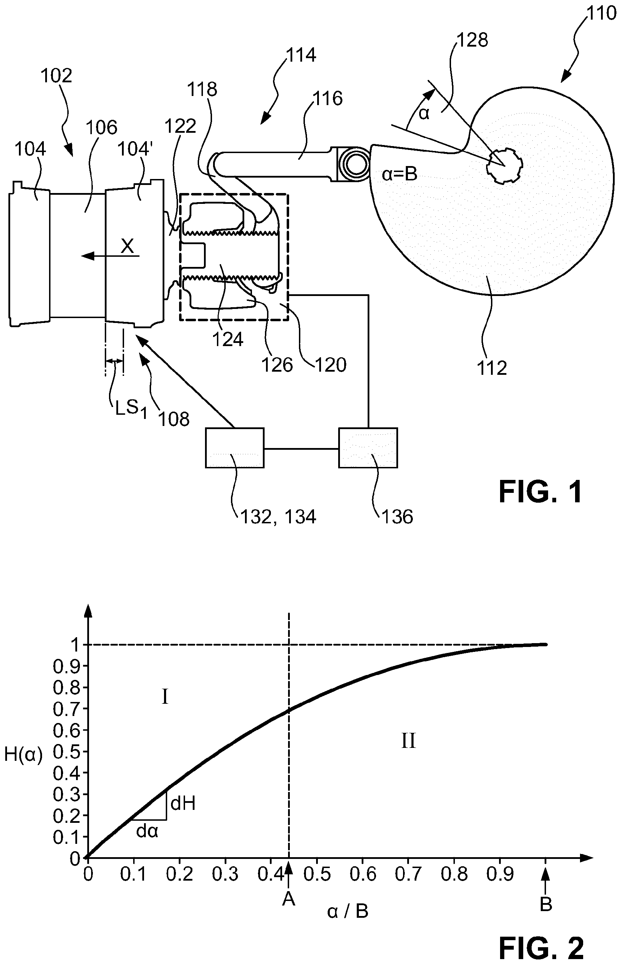

Fig. 1 zeigt eine Bremsvorrichtung 102, welche Bremsbeläge 104, 104', eine Bremsscheibe 106, eine Einstelleinheit 120, ein Übertragungsglied 114 sowie ein nichtlineares Getriebe 110 aufweist. Das Übertragungsglied 114 weist beispielsweise einen Stößel 116 auf. Das nichtlineare Getriebe 110 weist vorliegend eine Kurvenscheibe 112 auf, welche mit einem Antrieb gekoppelt ist. Der Antrieb ist beispielsweise ein Elektromotor, der als Antriebsgröße einen Drehwinkel α bereitstellt. Der Antrieb erzeugt mittels eines Antriebs-Drehmoments eine Winkeldrehung, die mittels der Kurvenscheibe 112 auf einen Stößel 116 übertragen wird, wobei der Stößel 116 auf der Oberfläche der Kurvenscheibe 112 abgleitet. Der Anstieg der Kurvenscheibe 112 variiert dabei in Abhängigkeit des Drehwinkels 128 (vgl. auch Fig. 2 für detailliertere Ausführungen hierzu). Mittels der Kurvenscheibe 112 wird eine rotatorische Bewegung des Antriebes um den Winkel α in eine translatorische Bewegung des Bremsstößels 116 übertragen. In Figur 1 ist die Kurvenscheibe 112 um ihren Maximalbetrag α = B gedreht worden. Die Kurvenscheibe 112 lenkt damit den Stößel 116 in dem in Fig. 1 gezeigten Zustand um seinen maximalen Hubweg X aus. Der Stößel 116 ist mit einem Exzenterhebel 118 gekoppelt, welcher wiederum einwirkt mittels einer Einstelleinheit 120 auf die Bremsbeläge 104, 104'. Der Stößel 116, drückt in der in Figur 1 gezeigten Stellung bei unverschlissenem Bremsbelag mittels des Übertragungsgliedes 114 und über die Einstelleinheit 120 die Bremsbeläge 104, 104' mit maximaler Zuspannkraft gegen die Bremsscheibe 106.

Die Einstelleinheit 120 dient dem Einstellen dieses Lüftspiels. Zu diesem Zweck weist die Einstelleinheit 120 einen Grundkörper 126 sowie eine Spindel 124 auf. Der Grundkörper 126 weist ein Innengewinde auf, wobei die Spindel 124 ein korrespondierendes Außengewinde aufweist. Durch Rotation der Spindel 124 kann ein Null-Hub und damit die translatorische Position des Bremsbelages bei α = 0 variiert werden. Im Stand der Technik wurde hiermit bei zunehmendem Bremsbelagsverschleiß das Lüftspiel kleingehalten, um bei Betätigung der Bremse ein rasches Anliegen einer Zuspannkraft zu erreichen. Erfindungsgemäß erfolgt das Gegenteil, wie nachfolgend ausgeführt wird.

In Fig. 2 ist eine Übertragungsfunktion H(α) der Kurvenscheibe 112 in Abhängigkeit von der Antriebsgröße, dem Drehwinkel α dargestellt. Die Übertragungsfunktion weist zwei Arbeitsbereiche I und II auf, welche kontinuierlich ineinander übergehen. Eine Drehwinkeländerung α der Kurvenscheibe 112 in dem ersten Arbeitsbereich führt zu einer größeren Änderung der Kraftübertragung und somit Auslenkung des Stößels 116 als in benachbarten zweiten Arbeitsbereich, da in dem ersten Arbeitsbereich I die Kurvenscheibendicke stärker zunimmt als in dem zweiten Arbeitsbereich II. Dies hat gleichzeitig zur Folge, dass bei gegebenem Antriebsmoment in dem ersten Arbeitsbereich I eine geringere Kraft auf dem Bremsstößel 116 aufgebracht wird, bzw. bei gegebener erforderlicher Bremsstößelkraft ein geringeres Antriebsmoment aufzubringen ist.

Wird der Drehwinkel der Kurvenscheibe weiter erhöht, so nimmt der Zuwachs der dicke ab. In diesem Bereich würde die die gleiche Drehwinkeländerung wie in dem ersten Arbeitsbereich I dazu führen, dass der Stößel 116 lediglich um eine geringere Strecke ausgelenkt wird, da der Kurvenscheibenanstieg in diesem Bereich niedriger ist. Dieses hat aber auch zur Folge, dass die übertragene Kraft von dem Antrieb auf den Stößel in diesem Bereich bei gegebenem Antriebs-Drehmoment zunehmen würde. Die Kurvenscheibe 112 ermöglicht somit zusammenfassend eine nichtlineare Übertragung des Antriebs-Drehmoments auf den Stößel 116 und schließlich auf die Bremsbeläge 104, 104'.

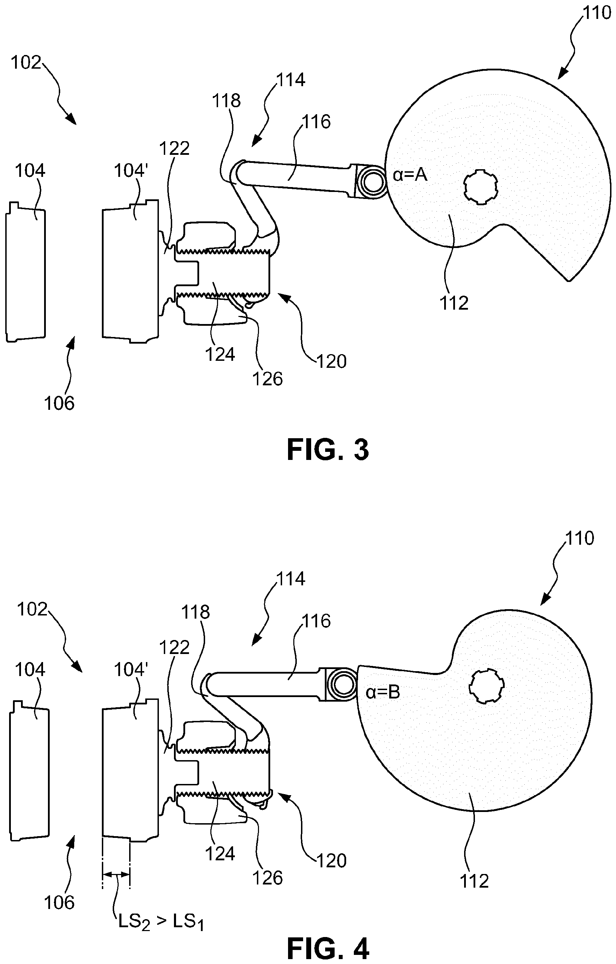

In Fig. 3 ist nun ein Zustand gezeigt, bei dem die Bremsbeläge 104, 104' verschlissen sind, das Lüftspiel 108 jedoch noch nicht angepasst wurde. Wie aus der Figur zu entnehmen ist, gelangt die Kurvenscheibe 112 aufgrund der gestiegenen Bremsensteifigkeit vorliegend bereits bei einem Drehwinkel von α = A und A < B; an den Punkt der maximalen Zuspannkraft. Da A noch in dem ersten Arbeitsbereich I der Übertragungsfunktion H(α) liegt und die Kurvenscheibendicke in diesem Bereich stärker zunimmt, ist aber eine höhere Antriebsleistung, d.h. ein höheres Antriebsmoment notwendig.

Hingegen wurde in Fig. 4 nun das Lüftspiel 108 für denselben Verschleißzustand der Bremsbeläge 104, 104' vergrößert. In der Konsequenz gelangt die Kurvenscheibe 112 nun erst nach Durchlaufen eines größeren Leerhubs mit der Bremsscheibe 106 in Anlage, so dass trotz höherer Bremsensteifigkeit die maximale Zuspannkraft in dem zweiten Arbeitsbereich der Übertragungsfunktion H(α) liegt, idealerweise ca. bei α = B, bei welchem die Steigung der Kurvenscheibe am geringsten ist. Dies hat zur Folge, dass die Kurvenscheibe 112 in diesem Betriebsbereich die maximale Zuspannkraft mit geringerem Antriebs-Drehmoment auf den Stößel 116 und damit schlussendlich auf die Bremsscheibe 106 überträgt, als in der in Fig. 3 dargestellten Situation. Eine Vergrößerung des Lüftspiels, wie in Fig. 4 gezeigt, hat also zur Folge, dass die Kurvenscheibe in einem Bereich betrieben wird, bei welcher die Kraft, die auf den Stößel 116 übertragen wird, im Verhältnis zur Antriebsleistung maximal ist und damit dazu geeignet ist, die zunehmende Bremsensteifigkeit, die sich aus dem Verschleiß derselben ergibt, zumindest teilweise auszugleichen.

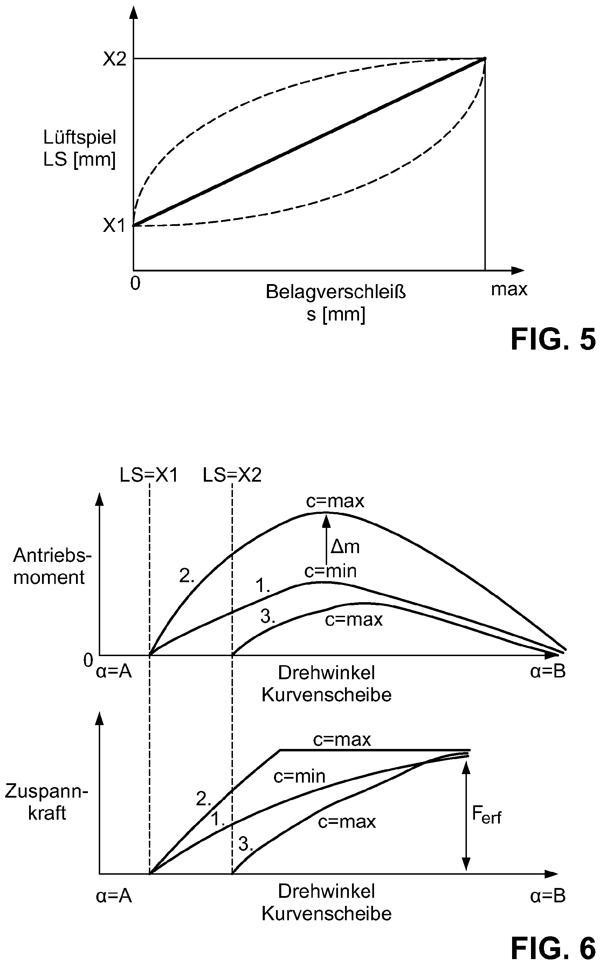

In Fig. 5 ist schließlich das Lüftspiel über den Belagsverschleiß aufgetragen. Wie der Figur zu entnehmen ist, bestehen verschiedene Optionen, das Lüftspiel in Abhängigkeit vom Belagsverschleiß anzupassen. Insbesondere bietet sich hier eine lineare Erhöhung des Lüftspiels in Abhängigkeit vom Blattverschleiß an (durchgezogene Linie) oder alternativ eine nichtlineare Anpassungen.

In Fig. 6 sind jeweils das Antriebsmoment sowie die Zuspannkraft über dem Drehwinkel der Kurvenscheibe aufgetragen. Bezugnehmend auf die obere Darstellung, bei der das Antriebsmoment über dem Drehwinkel der Kurvenscheibe aufgetragen ist, sind in dem Diagramm zunächst drei Kurven 1 bis 3 aufgetragen. Bei den Kurven 1 und 2 weist das Lüftspiel einen Wert X1 auf (vgl. hierzu auch Fig. 5). Für Kurve 1 weist die Bremse eine Bremsensteifigkeit c=min auf, wie sie für unverschlissene Bremsbeläge exemplarisch ist. In Kurve 2 Ist hingegen ein Zustand dargestellt, bei dem die Bremsensteifigkeit c einen Maximalwert c=max annimmt, welcher beispielsweise bei verschlissenen Bremsbelägen auftreten kann. Aus der Darstellung wird nun deutlich, dass das erforderliche Antriebsmoment zur Erreichung einer erforderlichen Zuspannkraft F_{erf} bei konstantem Lüftspiel LS=X1 mit zunehmender Bremsensteifigkeit deutlich zunimmt, nämlich um den Wert Δ m.

Wie dem in Figur 6 unten dargestellten Diagramm, bei dem die Zuspannkraft über dem Drehwinkel der Kurvenscheibe aufgetragen ist, zu entnehmen ist, befindet sich die Kurvenscheibe für Kurve 1 (c=max) noch in dem ersten Arbeitsbereich I der Übertragungsfunktion H(α). Hier nimmt die Kurvenscheibendicke als Funktion des Drehwinkels α stärker zu, sodass aufgrund der hohen Änderungsrate der Übertragungsfunktion H(α) bei höherer Bremsensteifigkeit eine umso höhere Antriebsleistung, d.h. ein höheres Antriebsmoment notwendig ist um die erforderliche Zuspannkraft F_{erf} zu erzielen. Die Zuspannkraft F_{erf} wird bereits bei einem kleineren Drehwinkel der Kurvenscheibe erzielt.

Bei der Kurve 3 wurde nun bei ebenfalls maximaler Bremsensteifigkeit c=max eine Vergrößerung des Lüftspiels von LS=X1 auf LS=X2 vorgenommen. Die Erhöhung des Lüftspiels hat zur Folge, dass die Kurvenscheibe nun erst nach Durchlaufen eines größeren Leerhubs mit der Bremsscheibe in Anlage tritt, so dass trotz höherer Bremsensteifigkeit die maximale Zuspannkraft in dem zweiten Arbeitsbereich II der Übertragungsfunktion H(α) liegt, idealerweise bei ca. α =B, bei welchem die Steigung der Kurvenscheibe am geringsten ist. In der Folge ist das Antriebsdrehmoment zu Erreichung einer erforderlichen Zuspannkraft F_{erf} geringer, als bei geringerem Lüftspiel LS=X1 und verschlissenen Belägen mit c=max und sogar geringer als bei unverschlissenen Belägen mit c=min und geringerem Lüftspiel LS=X1.

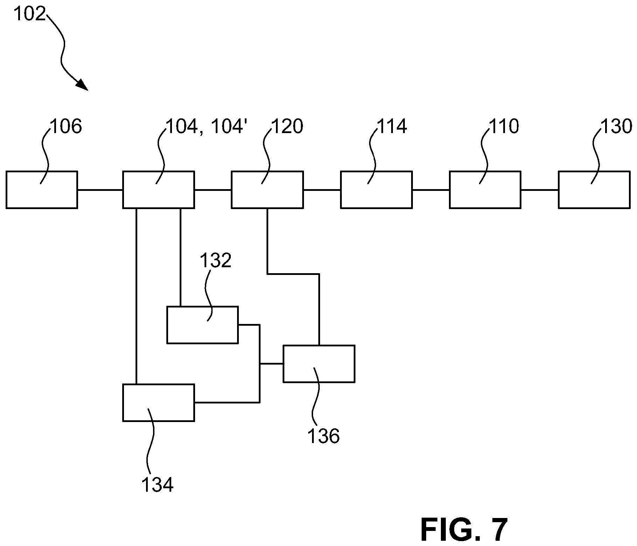

Fig. 7 zeigt das Ausführungsbeispiel der erfindungsgemäßen Bremsvorrichtung 102 in einer Blockschaltbild-Darstellung. Der Antrieb 130 (vgl. Fig. 1) generiert eine Antriebsgröße (α), welche mittels des nichtlinearen Getriebes 110 gemäß der Übertragungsfunktion H(α) in oben beschriebener Weise an ein Übertragungsglied 114 übertragen wird. Zur Einstellung des Lüftspiels ist dem Übertragungsglied 114 eine Einstelleinheit 120 zugeordnet. Das Übertragungsglied 114 wirkt in Zusammenschau mit der Einstelleinheit 120 auf die Bremsbeläge 104, 104' und drückt diese im Betätigungsfall an die Bremsscheibe 106. Für vertiefende Ausführungen hierzu sie auf die obigen Darstellungen verwiesen.

Den Bremsbelägen 104, 104' ist ein Bremsbelagsverschleißsensor 132 zur Sensierung des Verschleißgrades der Bremsbeläge und/oder optional ein Temperatursensor 134 zur Sensierung der Bremsentemperatur zugeordnet. Der beziehungsweise die Sensoren 132, 134 sind signalleitend mit einer Steuereinheit 136 verbunden, welche wiederum signalleitend mit der Einstelleinheit 120 verbunden ist und das Lüftspiel LS in Abhängigkeit des sensierten Bremsbelagsverschleißgrades sowie der Bremsbelagstemperatur steuert.

### Bezugszeichen (Teil der Beschreibung)

- 102: Bremsvorrichtung
- 104, 104': Bremsbeläge
- 106: Bremsscheibe
- 108: Lüftspiel
- 110: nichtlineares Getriebe
- 112: Kurvenscheibe
- 114: Übertragungsglied
- 116: Stößel
- 118: Exzenterhebel
- 120: Einstelleinheit
- 122: Andrückkörper
- 124: Verstellelement
- 126: Grundkörper
- 128: Drehwinkel
- 130: Antrieb
- 132: Bremsbelagsverschleißsensor
- 134: Temperatursensor
- 136: Steuereinheit
- X: Hubweg
- α: Antriebsgröße
- H(α): Übertragungsfunktion der Antriebsgröße
- A, B: Drehwinkel
- X1, X2: Lüftspielwerte
- F_{erf}: erforderliche Zuspannkraft
- c: Bremsensteifigkeit
- LS: Lüftspiel
- I, II: Arbeitsbereich
- s: Belagverschleiß

## Patentansprüche

1. Bremsvorrichtung (102), insbesondere Nutzfahrzeugscheibenbremse, mit:
- einer Bremsscheibe (106),
- mindestens einem Bremsbelag (104, 104'),
- einem mit dem Bremsbelag (104, 104') gekoppelten Übertragungsglied (114) zum Andrücken des mindestens einen Bremsbelags (104, 104') an die Bremsscheibe (106),
- einem Antrieb (130) zum Erzeugen einer Antriebsgröße (α),
- einem mit dem Antrieb (130) und dem Übertragungsglied (114) wirkverbundenen nichtlinearen Getriebe (110) zur nichtlinearen Übertragung der Antriebsgröße (α) auf das Übertragungsglied (114),
- einer Einstelleinheit (120) zum Einstellen eines Lüftspiels (108) zwischen dem Übertragungsglied (114) und der Bremsscheibe (106),
wobei die Bremsvorrichtung (102) einen Bremsbelagsverschleißsensor (132) zur Erfassung des Verschleißgrades des mindestens einen Bremsbelags (104, 104') aufweist,
und eine Steuereinheit (136), welche mit dem Bremsbelagsverschleißsensor (132) signalleitend verbunden ist und dazu eingerichtet ist, das Lüftspiel (108) in Abhängigkeit des vom Bremsbelagsverschleißsensor (132) ermittelten Verschleißes des Bremsbelags (104, 104') zu verändern **dadurch gekennzeichnet, dass** die Steuereinheit dazu eingerichtet ist, das Lüftspiel (108) mit zunehmendem Verschleiß des Bremsbelags (104, 104') zu vergrößern.

2. Bremsvorrichtung (102) nach Anspruch 1,
**dadurch gekennzeichnet, dass** das nichtlineare Getriebe (110) dazu eingerichtet ist, das Übertragungsglied (114) zwischen einer eingefahrenen Stellung und einer ausgefahrenen Stellung entlang eines Hubwegs (X) zu bewegen, wobei der Hubweg (X) aus einer Übertragungsfunktion (H(α)) der Antriebsgröße (α) resultiert.

3. Bremsvorrichtung (102) nach Anspruch 2,
wobei die Antriebsgröße (α) ein mittels eines Antriebsdrehmoments erzeugter Drehwinkel ist.

4. Bremsvorrichtung (102) nach einem der vorstehenden Ansprüche,
wobei das Getriebe (110) die Übertragungsfunktion definiert, und wobei die Übertragungsfunktion (H(α)) derart definiert ist, dass eine Änderungsrate von H bei zunehmender Antriebsgröße (α) abnimmt.

5. Bremsvorrichtung (102) nach Anspruch 4,
wobei das Getriebe (110) einen ersten Arbeitsbereich (I) und einen zweiten Arbeitsbereich (II) aufweist, wobei in dem zweiten Arbeitsbereich (II) die Änderungsrate der Übertragungsfunktion (H(α)) geringer ist als im ersten Arbeitsbereich (I).

6. Bremsvorrichtung (102) nach Anspruch 5,
wobei der erste Arbeitsbereich (I) kontinuierlich in den zweiten Arbeitsbereich (II) übergeht.

7. Bremsvorrichtung (102) nach einem der vorhergehenden Ansprüche,
**dadurch gekennzeichnet, dass** die Einstelleinheit (120) einen Spindelaktuator zum Einstellen des Lüftspiels (108) aufweist.

8. Bremsvorrichtung (102) nach einem der vorhergehenden Ansprüche,
**dadurch gekennzeichnet, dass** die Vorrichtung einen Temperatursensor (134) zur Erfassung der Temperatur des mindestens einen Bremsbelags (104, 104') aufweist, wobei die Steuereinheit (136) mit dem Temperatursensor (134) signalleitend verbunden ist und dazu eingerichtet ist, das Lüftspiel (108) in Abhängigkeit der vom Sensor (134) ermittelten Temperatur des Bremsbelags (104, 104') zu verändern.

9. Bremsvorrichtung (102) nach Anspruch 8,
**dadurch gekennzeichnet, dass** das Lüftspiel (108) mit abnehmender Temperatur des Bremsbelags (104, 104') vergrößert wird.

10. Verfahren zum Betrieb einer Bremsvorrichtung (102), insbesondere einer Nutzfahrzeugscheibenbremse, umfassend die Schritte:
- Erzeugen einer Antriebsgröße (α), insbesondere eines Antriebswinkels, vorzugsweise mittels eines Antriebs (130) wie beispielsweise eines Elektromotors;
- Nichtlineare Übertragung der Antriebsgröße (α) auf ein Übertragungsglied (114), insbesondere mittels eines nichtlinearen Getriebes (110) wie etwa eines Kurvenscheibengetriebes (112);
- Erfassen des Verschleißgrades mindestens eines Bremsbelages (104, 104') der Bremsvorrichtung (102), beispielsweise mittels eines Bremsbelagsverschleißsensors (132); und
- Verändern eines Lüftspiels (108) zwischen dem Übertragungsglied (114) und der Bremsscheibe (106) in Abhängigkeit des erfassten Verschleißgrads des mindestens einen Bremsbelags (104, 104')
- Vergrößern des Lüftspiels (108) mit zunehmendem Verschleiß des Bremsbelags (104, 104'), vorzugsweise linear, progressiv oder degressiv.

11. Verfahren nach Anspruch 10, weiterhin umfassend den Schritt:
- Bewegen des Übertragungsglieds (114) zwischen einer eingefahrenen Stellung und einer ausgefahrenen Stellung entlang eines Hubwegs (X), wobei der Hubweg (X) aus einer Übertragungsfunktion (H(α)) der Antriebsgröße resultiert, wobei vorzugsweise die Antriebsgröße (α) ein mittels eines Antriebsdrehmoments erzeugter Drehwinkel ist.

12. Verfahren nach einem der Ansprüche 10 oder 11, weiterhin umfassend den Schritt:
- Erfassen der Temperatur des mindestsens einen Bremsbelags (104, 104').

13. Verfahren nach einem der Ansprüche 10 bis 12, weiterhin umfassend den Schritt:
- Verändern des Lüftspiels (108) in Abhängigkeit der Temperatur des Bremsbelags (104, 104'), vorzugsweise Vergrößern des Lüftspiels (108) mit abnehmender Temperatur des Bremsbelags (104, 104') und/oder Verringern des Lüftspiels (108) mit zunehmender Temperatur des Bremsbelags (104, 104').

## Claims

1. A brake device (102), in particular a utility vehicle disk brake, having:
- a brake disk (106),
- at least one brake pad (104, 104'),
- a transmission member (114) coupled to the brake pad (104, 104') and used to press the at least one brake pad (104, 104') against the brake disk (106),
- a drive (130) for producing a drive variable (α),
- a non-linear gear (110) which is operatively connected to the drive (130) and the transmission member (114) and used for the non-linear transmission of the drive variable (α) to the transmission member (114),
- an adjusting unit (120) for adjusting an air gap (108) between the transmission member (114) and the brake disk (106),
wherein the brake device (102) comprises a brake pad wear sensor (132) for detecting the degree of wear of the at least one brake pad (104, 104'),
and a control unit (136) which is connected to the brake pad wear sensor (132) in a signal-conducting manner and is designed to modify the air gap (108) according to the wear of the brake pad (104, 104') determined by the brake pad wear sensor (132), **characterized in that** the control unit is designed to enlarge the air gap (108) with increasing wear of the brake pad (104, 104').

2. The brake device (102) according to claim 1,
**characterized in that** the non-linear gear (110) is designed to move the transmission member (114) between a retracted position and an extended position along a stroke travel (X), wherein the stroke travel (X) results from a transmission function (H(α)) of the drive variable (α).

3. The brake device (102) according to claim 2,
wherein the drive variable (α) is an angle of rotation generated by means of a drive torque.

4. The brake device (102) according to any of the preceding claims,
wherein the gear (110) defines the transmission function, and wherein the transmission function (H(α)) is defined such that a rate of variation of H decreases when the drive variable (α) increases.

5. The brake device (102) according to claim 4,
wherein the gear (110) comprises a first working range (I) and a second working range (II), wherein the rate of variation of the transmission function (H(α)) is less in the second working range (II) than in the first working range (I).

6. The brake device (102) according to claim 5,
wherein the first working range (I) continuously merges into the second working range (II).

7. The brake device (102) according to any of the preceding claims,
**characterized in that** the adjusting unit (120) comprises a spindle actuator for adjusting the clearance (108).

8. The brake device (102) according to any of the preceding claims,
**characterized in that** the device comprises a temperature sensor (134) for detecting the temperature of the at least one brake pad (104, 104'), wherein the control unit (136) is connected to the temperature sensor (134) in a signal-conducting manner and is designed to modify the clearance (108) as a function of the temperature of the brake pad (104, 104') determined by the sensor (134).

9. The brake device (102) according to claim 8,
**characterized in that** the clearance (108) is enlarged as the temperature of the brake pad (104, 104') decreases.

10. A method for operating a brake device (102), in particular a utility vehicle disk brake, comprising the steps:
- generating a drive variable (α), in particular of a drive angle, preferably by means of a drive (130) such as for example an electric motor;
- non-linear transmission of the drive variable (α) to a transmission member (114), in particular by means of a non-linear gear (110) such as a cam disk gear (112);
- detecting the degree of wear of at least one brake pad (104, 104') of the brake device (102), for example by means of a brake pad wear sensor (132); and
- modifying a clearance (108) between the transmission member (114) and the brake disk (106) as a function of the detected degree of wear of the at least one brake pad (104, 104');
- enlarging the clearance (108) as the wear of the brake pad (104, 104') increases, preferably linearly, progressively or degressively.

11. The method according to claim 10, further comprising the step of:
- moving the transmission member (114) between a retracted position and an extended position along a travel stroke (X), wherein the travel stroke (X) results from a transmission function (H(α)) of the drive variable, wherein preferably the drive variable (α) is an angle of rotation generated by means of a drive torque.

12. The method according to any of claims 10 or 11, further comprising the step of:
- detecting the temperature of the at least one brake pad (104, 104').

13. The method according to any of claims 10 to 12, further comprising the step of:
- modifying the clearance (108) as a function of the temperature of the brake pad (104, 104'), preferably enlarging the clearance (108) as the temperature of the brake pad (104, 104') decreases and/or reducing the clearance (108) as the temperature of the brake pad (104, 104') increases.

## Revendications

1. Dispositif de freinage (102), en particulier frein à disque de véhicule utilitaire, avec :
- un disque de frein (106),
- au moins une garniture de frein (104, 104'),
- un élément de transmission (114) accouplé à la garniture de frein (104, 104') pour presser l'au moins une garniture de frein (104, 104') sur le disque de frein (106),
- un entraînement (130) pour produire une grandeur d'entraînement (α),
- une transmission non linéaire (110) en liaison fonctionnelle avec l'entraînement (130) et l'élément de transmission (114) pour la transmission non linéaire de la grandeur d'entraînement (α) à l'élément de transmission (114),
- une unité de réglage (120) pour régler un jeu (108) entre l'élément de transmission (114) et le disque de frein (106),
dans lequel le dispositif de freinage (102) présente un capteur d'usure de garniture de frein (132) pour détecter le degré d'usure de l'au moins une garniture de frein (104, 104'),
et une unité de commande (136), laquelle est reliée au capteur d'usure de garniture de frein (132) de manière à conduire des signaux et est conçue pour modifier le jeu (108) en fonction de l'usure de la garniture de frein (104, 104') déterminée par le capteur d'usure de garniture de frein (132), **caractérisé en ce que** l'unité de commande est conçue pour augmenter le jeu (108) avec l'usure croissante de la garniture de frein (104, 104').

2. Dispositif de freinage (102) selon la revendication 1,
**caractérisé en ce que** la transmission non linéaire (110) est conçue pour déplacer l'élément de transmission (114) le long d'une course (X) entre une position rentrée et une position sortie, dans lequel la course (X) résulte d'une fonction de transmission (H(α)) de la grandeur d'entraînement (α).

3. Dispositif de freinage (102) selon la revendication 2,
dans lequel la grandeur d'entraînement (α) est un angle de rotation produit au moyen d'un couple d'entraînement.

4. Dispositif de freinage (102) selon l'une quelconque des revendications précédentes,
dans lequel la transmission (110) définit la fonction de transmission, et dans lequel la fonction de transmission (H(α)) est définie de telle sorte qu'un taux de changement de H décroît lorsque la grandeur d'entraînement (α) est croissante.

5. Dispositif de freinage (102) selon la revendication 4,
dans lequel la transmission (110) présente une première zone de travail (I) et une deuxième zone de travail (II), dans lequel, dans la deuxième zone de travail (II), le taux de changement de la fonction de transmission (H(α)) est plus petit que dans la première zone de travail (I).

6. Dispositif de freinage (102) selon la revendication 5,
dans lequel la première zone de travail (I) passe en continu dans la deuxième zone de travail (II).

7. Dispositif de freinage (102) selon l'une quelconque des revendications précédentes,
**caractérisé en ce que** l'unité de réglage (120) présente un actionneur de broche pour le réglage du jeu (108).

8. Dispositif de freinage (102) selon l'une quelconque des revendications précédentes,
**caractérisé en ce que** le dispositif présente un capteur de température (134) pour détecter la température de l'au moins une garniture de frein (104, 104'), dans lequel l'unité de commande (136) est reliée au capteur de température (134) de manière à conduire des signaux et est conçue pour modifier le jeu (108) en fonction de la température de la garniture de frein (104, 104') déterminée par le capteur (134).

9. Dispositif de freinage (102) selon la revendication 8,
**caractérisé en ce que** le jeu (108) est augmenté avec la température décroissante de la garniture de frein (104, 104').

10. Procédé pour faire fonctionner un dispositif de freinage (102), en particulier d'un disque de frein de véhicule utilitaire, comprenant les étapes :
- de production d'une grandeur d'entraînement (α), en particulier d'un angle d'entraînement, de préférence au moyen d'un entraînement (130) tel que par exemple d'un moteur électrique ;
- de transmission non linéaire de la grandeur d'entraînement (α) à un élément de transmission (114), en particulier au moyen d'une transmission non linéaire (110) telle que par exemple d'une transmission à came (112) ;
- de détection du degré d'usure d'au moins une garniture de frein (104, 104') du dispositif de freinage (102), par exemple au moyen d'un capteur d'usure de garniture de frein (132) ; et
- de modification d'un jeu (108) entre l'élément de transmission (114) et le disque de frein (106) en fonction du degré d'usure détecté de l'au moins une garniture de frein (104, 104')
- d'augmentation du jeu (108) avec l'usure croissante de la garniture de frein (104, 104'), de préférence linéaire, progressive ou dégressive.

11. Procédé selon la revendication 10, comprenant en outre l'étape :
- de déplacement de l'élément de transmission (114) le long d'une course (X) entre une position rentrée et une position sortie, dans lequel la course (X) résulte d'une fonction de transmission (H(α)) de la grandeur d'entraînement, dans lequel de préférence la grandeur d'entraînement (α) est un angle de rotation produit au moyen d'un couple d'entraînement.

12. Procédé selon l'une quelconque des revendications 10 ou 11, comprenant en outre l'étape :
- de détection de la température de l'au moins une garniture de frein (104, 104').

13. Procédé selon l'une quelconque des revendications 10 à 12, comprenant en outre l'étape :
- de modification du jeu (108) en fonction de la température de la garniture de frein (104, 104'), de préférence d'augmentation du jeu (108) avec la température décroissante de la garniture de frein (104, 104') et/ou de diminution du jeu (108) avec la température croissante de la garniture de frein (104, 104').
